# EUROPEAN PATENT APPLICATION

(11) **EP 4 513 773 A1**
(43) Date of publication of application: **26.02.2025**
(21) Application number: 23810896.3
(22) Date of filing: 16.05.2023
(51) Int. Cl.: H04B 7/0408

(54) **ANTENNA SET DETERMINATION METHOD, ELECTRONIC DEVICE, AND COMPUTER-READABLE MEDIUM**

(30) Priority: 27.05.2022 CN 202210592598
(71) Applicant: ZTE Corporation, Shenzhen, Guangdong 518057 (CN)
(72) Inventor: YE, Xinquan, Shenzhen, Guangdong 518057 (CN); CHEN, Yijian, Shenzhen, Guangdong 518057 (CN); YU, Guanghui, Shenzhen, Guangdong 518057 (CN); LU, Zhaohua, Shenzhen, Guangdong 518057 (CN)
(74) Representative: Canzler & Bergmeier Patentanwälte Partnerschaft mbB
(86) International application number: PCT/CN2023/094494
(87) International publication number: WO 2023/226823

(57) **Abstract**

The present disclosure provides an antenna set determination method, comprising: determining antenna set configuration information, wherein the antenna set configuration information represents the configuration condition of an antenna set formed by minimum antenna unit sub-modules; and determining feature indication information of the antenna set according to the antenna set configuration information. The present disclosure further provides an electronic device and a computer-readable medium.

## Description

### TECHNICAL FIELD

The present disclosure relates to the technical field of communications, and in particular, to a method for determining an antenna set, an electronic device, and a computer-readable medium.

### BACKGROUND

As potential key technical points in the B5G/6G multi-antenna direction, Distributed Multiple-Input Multiple-Output (Distributed MIMO) and Cell-Free Massive Multiple-Input Multiple-Output (CF-MIMO) receive more and more attention. One significant feature of those technologies is that, in a given area, spatial distribution of Access Points (APs) is more dispersed than that of centralized APs used in the current NR technology, the APs are in a relatively large number, and a plurality of APs simultaneously serve a plurality of User Equipments (UEs).

How to improve the flexibility of AP deployment to meet different requirements has become a problem that is urgent to be solved.

### SUMMARY

Embodiments of the present disclosure provide a method for determining an antenna set, an electronic device, and a computer-readable medium.

In a first aspect, an embodiment of the present disclosure provides a method for determining an antenna set, including: determining antenna set configuration information; and determining feature indication information of the antenna set according to the antenna set configuration information.

In some embodiments, the antenna set configuration information includes at least one of: feature indication information of K basic antenna sub-modules, where the antenna set configuration information represents a configuration situation of the antenna set consisting of minimum antenna sub-modules; position indication information of the K basic antenna sub-modules; rotation indication information of the K basic antenna sub-modules; or feature indication information of a reference antenna module, and K is a positive integer, and each of the basic antenna sub-modules and the reference antenna module consists of ones of the minimum antenna sub-modules.

In some embodiments, the antenna set configuration information further includes configuration information of basic antenna sub-module groups, K0 basic antenna sub-modules among the K basic antenna sub-modules are divided into n different basic antenna sub-module groups, and the configuration information of the basic antenna sub-module groups includes at least one of: feature indication information of the basic antenna sub-module groups, position indication information of the basic antenna sub-module groups, or rotation indication information of the basic antenna sub-module groups, and K, K0, and n are positive integers, and K0 is not greater than K.

In some embodiments, the feature indication information of a basic antenna sub-module includes at least one of: a shape of the basic antenna sub-module, a number of antenna elements of the basic antenna sub-module, spatial distribution of the antenna elements of the basic antenna sub-module, a polarization direction of the antenna elements of the basic antenna sub-module, a reference point of the basic antenna sub-module, indexes of minimum antenna sub-modules of the basic antenna sub-module, antenna port indexes of the basic antenna sub-module, or an indexing mode of the basic antenna sub-module, and the reference point of the basic antenna sub-module represents a location of a specified minimum antenna sub-module of the basic antenna sub-module.

In some embodiments, the shape of the basic antenna sub-module includes a uniform linear array, a uniform arcuate array, a uniform rectangular area array, an L shape, a T shape, an S shape, and a shape of a Chinese character of " 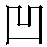 ".

In some embodiments, the position indication information of a basic antenna sub-module indicates an index of a minimum antenna sub-module, which corresponds to a reference point of the basic antenna sub-module, in the reference antenna module, and the rotation indication information of the basic antenna sub-module indicates an angle of rotation of the basic antenna sub-module with respect to the reference point of the basic antenna sub-module.

In some embodiments, the feature indication information of the reference antenna module includes at least one of: a shape of the reference antenna module, a number of antenna elements of the reference antenna module, spatial distribution of the antenna elements of the reference antenna module, a polarization direction of the antenna elements of the reference antenna module, a reference point of the reference antenna module, indexes of minimum antenna sub-modules of the reference antenna module, antenna port indexes of the reference antenna module, or an indexing mode of the reference antenna module.

In some embodiments, the shape of the reference antenna module includes: a uniform rectangular area array, and a uniform circular linear array.

In some embodiments, among the n basic antenna sub-module groups, each basic antenna sub-module group includes at least one basic antenna sub-module, and the basic antenna sub-modules in each basic antenna sub-module group are the same, the feature indication information of the basic antenna sub-module group is the feature indication information of the basic antenna sub-modules in the basic antenna sub-module group, the position indication information of the basic antenna sub-module group indicates an index of a minimum antenna sub-module, which corresponds to a reference point of each basic antenna sub-module in the basic antenna sub-module group, in the reference antenna module, and the rotation indication information of the basic antenna sub-module group indicates an angle of rotation of each basic antenna sub-module in the basic antenna sub-module group around a respective reference point.

In some embodiments, in a case where a shape of any basic antenna sub-module among the K basic antenna sub-modules is a uniform rectangular area array and/or a total number of indexes of minimum antenna sub-modules of the any basic antenna sub-module is 1, the antenna set configuration information includes no rotation indication information of the basic antenna sub-module.

In some embodiments, in a case where shapes of the basic antenna sub-modules in any basic antenna sub-module group among the n basic antenna sub-module groups are uniform rectangular area arrays and/or a total number of indexes of minimum antenna sub-modules of the basic antenna sub-modules in the any basic antenna sub-module group is 1, the antenna set configuration information includes no rotation indication information of the basic antenna sub-module group.

In some embodiments, in a case where a total number of indexes of minimum antenna sub-modules of any basic antenna sub-module among the K basic antenna sub-modules is 1, the antenna set configuration information includes no reference point of the basic antenna sub-module.

In some embodiments, in a case where a total number of indexes of minimum antenna sub-modules of the basic antenna sub-modules in the basic antenna sub-module group in any basic antenna sub-module group among the n basic antenna sub-module groups is 1, the antenna set configuration information includes no reference points of the basic antenna sub-modules in the basic antenna sub-module group.

In some embodiments, the determining the feature indication information of the antenna set according to the antenna set configuration information includes: determining the feature indication information of the antenna set according to feature indication information of K basic antenna sub-modules, position indication information of the K basic antenna sub-modules, rotation indication information of the K basic antenna sub-modules, and feature indication information of a reference antenna module; or, determining the feature indication information of the antenna set according to feature indication information of basic antenna sub-module groups, position indication information of the basic antenna sub-module groups, rotation indication information of the basic antenna sub-module groups, and the feature indication information of the reference antenna module, where a total number of basic antenna sub-modules in all of the basic antenna sub-module groups is K; or, determining the feature indication information of the antenna set according to the feature indication information of the K basic antenna sub-modules, the position indication information of the K basic antenna sub-modules, and the feature indication information of the reference antenna module; or, determining the feature indication information of the antenna set according to the feature indication information of the basic antenna sub-module groups, the position indication information of the basic antenna sub-module groups, and the feature indication information of the reference antenna module; or, determining the feature indication information of the antenna set according to the feature indication information of K - K0 basic antenna sub-modules, the position indication information of the K-K0 basic antenna sub-modules, the rotation indication information of the K-K0 basic antenna sub-modules, the feature indication information of the basic antenna sub-module groups, the position indication information of the basic antenna sub-module groups, the rotation indication information of the basic antenna sub-module groups, and the feature indication information of the reference antenna module, where a total number of basic antenna sub-modules in all of the basic antenna sub-module groups is K0, and K is greater than K0; or, determining the feature indication information of the antenna set according to the feature indication information of the K-K0 basic antenna sub-modules, the position indication information of the K-K0 basic antenna sub-modules, the feature indication information of the basic antenna sub-module groups, the position indication information of the basic antenna sub-module groups, and the feature indication information of the reference antenna module, where the total number of the basic antenna sub-modules in all of the basic antenna sub-module groups is K0, and K is greater than K0; or, determining the feature indication information of the antenna set according to the feature indication information of the K-KO basic antenna sub-modules, the position indication information of the K-KO basic antenna sub-modules, the feature indication information of the basic antenna sub-module groups, the position indication information of the basic antenna sub-module groups, the position indication information of the basic antenna sub-module groups, and the feature indication information of the reference antenna module, where the total number of the basic antenna sub-modules in all the basic antenna sub-module groups is K0, and K is greater than K0; or, determining the feature indication information of the antenna set according to the feature indication information of the K-K0 basic antenna sub-modules, the position indication information of the K - K0 basic antenna sub-modules, the rotation indication information of the K-K0 basic antenna sub-modules, the feature indication information of the basic antenna sub-module groups, the position indication information of the basic antenna sub-module groups, and the feature indication information of the reference antenna module, where the number of the basic antenna sub-modules in all of the basic antenna sub-module groups is K0, and K is greater than K0.

In some embodiments, the feature indication information of the antenna set includes at least one of: a shape of the antenna set, a number of antenna elements of the antenna set, spatial distribution of the antenna elements of the antenna set, a polarization direction of the antenna elements of the antenna set, a reference point of the antenna set, indexes of the minimum antenna sub-modules of the antenna set, antenna port indexes of the antenna set, or an indexing mode of the antenna set.

In some embodiments, the indexing mode of the antenna set includes: an indexing mode of the minimum antenna modules of the antenna set, an indexing mode of antenna ports of the antenna set, and an association relationship between the indexing mode of the minimum antenna modules of the antenna set and the indexing mode of the antenna ports of the antenna set.

In some embodiments, in a case where a number of each of different basic antenna sub-modules in the antenna set is 1, shapes of the basic antenna sub-modules in the antenna set are selected from a uniform arcuate array, an L shape, a T shape, an S shape, and a shape of a Chinese character of " 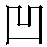 ", and the feature indication information of the antenna set is the same as feature indication information of the corresponding basic antenna sub-modules.

In some embodiments, in a case where a number of each of different basic antenna sub-modules in the antenna set is greater than 1, shapes of the basic antenna sub-modules in the antenna set are selected from a uniform arcuate array, an L shape, a T shape, an S shape, a shape of a Chinese character of " 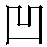 ", a uniform linear array, and a uniform rectangular area array, and the feature indication information of the antenna set is the same as feature indication information of the corresponding basic antenna sub-modules or feature indication information of corresponding basic antenna sub-module groups, or the feature indication information of the antenna set is partially the same as the feature indication information of the corresponding basic antenna sub-modules or the feature indication information of the corresponding basic antenna sub-module groups, or the feature indication information of the antenna set is different from the feature indication information of the corresponding basic antenna sub-modules or the feature indication information of the corresponding basic antenna sub-module groups.

In some embodiments, the feature indication information of the antenna set is partially the same as the feature indication information of the corresponding basic antenna sub-modules, and/or a polarization direction of the antenna set is the same as polarization directions of the corresponding basic antenna sub-modules, and/or the antenna set is different from the corresponding basic antenna sub-modules in shape, number of antenna elements, and spatial distribution of antenna elements.

In some embodiments, the method is performed by any one of an Access Point (AP), a User Equipment (UE), a Central Processing Unit (CPU), and a Mobile Edge Computing (MEC) device.

In a second aspect, an embodiment of the present disclosure provides an electronic device, including: one or more processors; a storage device having stored thereon one or more programs which, when executed by the one or more processors, cause the one or more processors to implement the method described in the first aspect of the embodiments of the present disclosure; and one or more input/output (I/O) interfaces connected between the one or more processors and the storage device and configured to enable information interaction between the one or more processors and the storage device.

In a third aspect, an embodiment of the present disclosure provides computer-readable medium having stored thereon a computer program which, when executed by a processor, implements the method described in the first aspect of the embodiments of the present disclosure.

In the embodiments of the present disclosure, by determining the antenna set configuration information and determining the feature indication information of the antenna set according to the antenna set configuration information, the antenna set which constitutes a specific antenna can be determined, which facilitates flexible deployment of APs, thereby improving a coverage effect of antenna beams and signal quality, increasing a communication speed, and reducing a communication delay.

### BRIEF DESCRIPTION OF DRAWINGS

FIG. 1 is a flowchart illustrating a method for determining an antenna set according to an embodiment of the present disclosure;
FIG. 2 is a schematic diagram of a minimum antenna sub-module according to an embodiment of the present disclosure;
FIG. 3 is a schematic diagram of a basic antenna sub-module according to an embodiment of the present disclosure;
FIG. 4 is a schematic diagram of a basic antenna sub-module according to an embodiment of the present disclosure;
FIG. 5 is a schematic diagram of a basic antenna sub-module according to an embodiment of the present disclosure;
FIG. 6 is a schematic diagram of a basic antenna sub-module according to an embodiment of the present disclosure;
FIG. 7 is a schematic diagram of a basic antenna sub-module according to an embodiment of the present disclosure;
FIG. 8 is a schematic diagram of a basic antenna sub-module according to an embodiment of the present disclosure;
FIG. 9 is a schematic diagram of a basic antenna sub-module according to an embodiment of the present disclosure;
FIG. 10 is a schematic diagram of a reference antenna module according to an embodiment of the present disclosure;
FIG. 11 is a schematic diagram of a reference antenna module according to an embodiment of the present disclosure;
FIG. 12 is a block diagram of an electronic device according to an embodiment of the disclosure;
FIG. 13 is a block diagram of a computer-readable medium according to an embodiment of the disclosure;
FIG. 14 is a schematic diagram illustrating determination of an antenna set in an example;
FIG. 15 is a schematic diagram illustrating determination of an antenna set in an example; and
FIG. 16 is a schematic diagram illustrating determination of an antenna set in an example.

### DETAIL DESCRIPTION

In order to enable those of ordinary skill in the art to better understand the technical solutions of the present disclosure, an antenna set determination method, an electronic device, and a computer-readable medium provided by the present disclosure are described in detail below with reference to the drawings.

Exemplary embodiments of the present disclosure will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In potential application scenarios of the CF-MIMO in the future, such as large gymnasiums, shopping malls, airports, and automatic factories, spatial distribution of UEs is very complex, and there may be a case that the UEs in some areas are distributed densely and are in a larger number, the UEs in some areas are distributed sparsely and are in a smaller number, and the UEs in some areas have moderate density and are in a moderate number, so that requirements of services for different spatial positions are different, which further requires flexible deployment of the APs to meet the different requirements. For example, when an AP needs to be deployed in a corner of a building or on a surface of an object, an antenna module which is a uniform-rectangular-area (URA) array antenna cannot be mounted well due to space limitation, in which case a specific antenna module which has an irregular shape may be placed at a corresponding position. After the specific antenna module is deployed, on one hand, a better beam coverage effect can be produced due to a shorter distance between the AP and an UE and more flexible orientation of the antenna module; and on the other hand, a communication speed can be further increased and a communication delay can be significantly reduced due to improved signal quality. In addition, the shape of the specific antenna module has various possibilities, and the specific antenna module has good expandability, so that the specific antenna module can be flexibly deployed in different application scenarios. The URA array antenna module does not have the above characteristics of the specific antenna module.

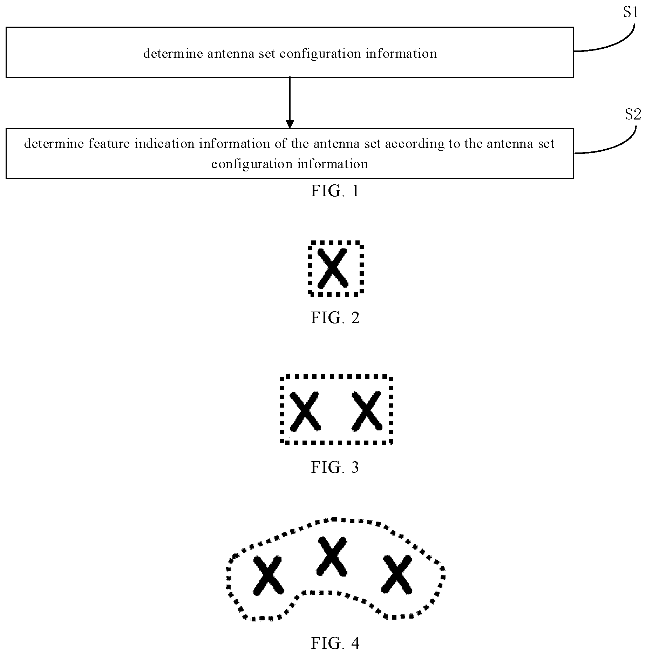

In view of the above, in a first aspect, referring to FIG. 1, an embodiment of the present disclosure provides an antenna set determination method, including steps S1 and S2.

In step S1, antenna set configuration information is determined, the antenna set configuration information representing a configuration situation of an antenna set consisting of minimum antenna sub-modules.

In step S2, feature indication information of the antenna set is determined according to the antenna set configuration information.

In the embodiments of the present disclosure, by determining the antenna set configuration information and determining the feature indication information of the antenna set according to the antenna set configuration information, the antenna set constituting a specific antenna can be determined, which facilitates flexible deployment of APs, thereby improving a coverage effect of antenna beams and signal quality, increasing a communication speed, and reducing a communication delay.

In some embodiments, the antenna set configuration information includes at least one of: feature indication information of K basic antenna sub-modules, position indication information of the K basic antenna sub-modules, rotation indication information of the K basic antenna sub-modules, or feature indication information of a reference antenna module. K is a positive integer, and each of the basic antenna sub-modules and the reference antenna module consists of ones of the minimum antenna sub-modules.

In some embodiments, the minimum antenna sub-module consists of at least one antenna element. In some embodiments, the minimum antenna sub-module is as shown in FIG. 2.

In some embodiments, each basic antenna sub-module includes one or more minimum antenna sub-modules. Each basic antenna sub-module corresponds to at least one of a piece of feature indication information, a piece of position indication information, or a piece of rotation indication information in the antenna set configuration information.

In the embodiments of the present disclosure, the reference antenna module defines a range (e.g., a maximum range) where the basic antenna sub-modules are allowed to be disposed, that is, the basic antenna sub-modules may be disposed at different positions in the reference antenna module.

It should be noted that the antenna set configuration information including the reference antenna module does not mean that a minimum antenna sub-module is actually disposed at each corresponding position in the antenna set.

In some embodiments, the antenna set configuration information further includes: configuration information of basic antenna sub-module groups, and K0 basic antenna sub-modules among the K basic antenna sub-modules are divided into n different basic antenna sub-module groups.

In some embodiments, the configuration information of the basic antenna sub-module groups includes at least one of: feature indication information of the basic antenna sub-module groups; position indication information of the basic antenna sub-module groups; or rotation indication information of the basic antenna sub-module groups.

K, K0, and n are positive integers, and K0 is not greater than K.

In the embodiments of the present disclosure, all the basic antenna sub-modules may be divided into the basic antenna sub-module groups; or, part of the basic antenna sub-modules may be divided into the basic antenna sub-module groups, and the remaining part of the basic antenna sub-modules may be separated; or, there are no basic antenna sub-module groups, and the basic antenna sub-modules are all separated.

In some embodiments, the feature indication information of the basic antenna sub-module includes at least one of: a shape of the basic antenna sub-module; the number of antenna elements of the basic antenna sub-module; spatial distribution of the antenna elements of the basic antenna sub-module; a polarization direction of the antenna elements of the basic antenna sub-module; a reference point of the basic antenna sub-module; indexes of minimum antenna sub-modules of the basic antenna sub-module; antenna port indexes of the basic antenna sub-module; or an indexing mode of the basic antenna sub-module. The reference point of the basic antenna sub-module represents a location of a specified minimum antenna sub-module of the basic antenna sub-module.

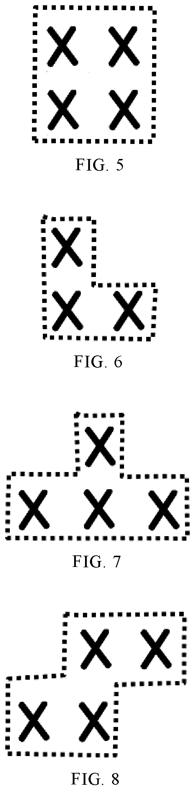

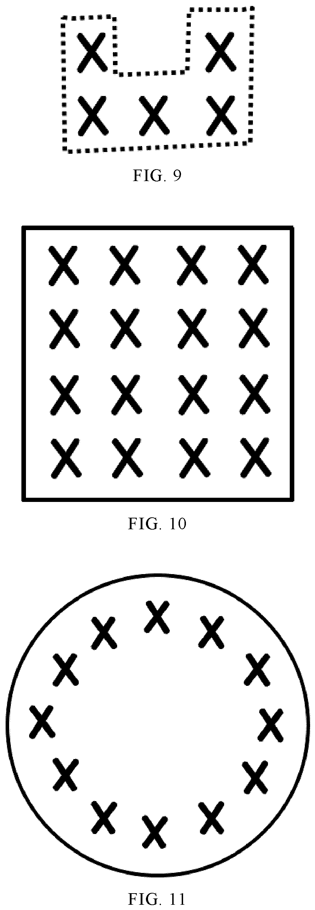

In some embodiments, as shown in FIG. 3 to FIG. 9, the shape of the basic antenna sub-module refers to a shape formed by the minimum antenna sub-modules, or a shape formed by the antenna elements in the minimum antenna sub-modules with a same polarization direction. In some embodiments, the shape of the basic antenna sub-module includes, but is not limited to, a uniform linear array (FIG. 3), a uniform arcuate array (FIG. 4), a uniform rectangular area array (FIG. 5), an L shape (FIG. 6), a T shape (FIG. 7), an S shape (FIG. 8), and a shape of the Chinese character of " 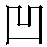 " (FIG. 9).

In some embodiments, the position indication information of the basic antenna sub-module indicates an index of a minimum antenna sub-module, which corresponds to the reference point of the basic antenna sub-module, in the reference antenna module.

In some embodiments, the position indication information of the basic antenna sub-module is configured to define a position of the basic antenna sub-module. For example, the reference point of the basic antenna sub-module needs to be located at a minimum antenna sub-module in the reference antenna module, and an index of the minimum antenna sub-module can represent the position of the basic antenna sub-module, so the index of the minimum antenna sub-module may be used as the position indication information.

In some embodiments, the rotation indication information of the basic antenna sub-module indicates an angle of rotation of the basic antenna sub-module with respect to the reference point of the basic antenna sub-module.

In some embodiments, the feature indication information of the reference antenna module includes at least one of: a shape of the reference antenna module; the number of antenna elements of the reference antenna module; spatial distribution of the antenna elements of the reference antenna module; a polarization direction of the antenna elements of the reference antenna module; a reference point of the reference antenna module; indexes of minimum antenna sub-modules of the reference antenna module; antenna port indexes of the reference antenna module; or an indexing mode of the reference antenna module.

In some embodiments, as shown in FIG. 10 and FIG. 11, the shape of the reference antenna module refers to a shape formed by the minimum antenna sub-modules, or a shape formed by the antenna elements in the minimum antenna sub-modules with a same polarization direction. In some embodiments, the shape of the reference antenna module includes: a uniform rectangular area array (FIG. 10), and a uniform circular linear array (FIG. 11).

In some embodiments, among the n different basic antenna sub-module groups, each basic antenna sub-module group includes at least one basic antenna sub-module, and the basic antenna sub-modules in each basic antenna sub-module group are the same.

In some embodiments, the feature indication information of the basic antenna sub-module group is the feature indication information of the basic antenna sub-modules in the basic antenna sub-module group.

In some embodiments, the position indication information of the basic antenna sub-module group indicates an index of a minimum antenna sub-module, which corresponds to the reference point of each basic antenna sub-module in the basic antenna sub-module group, in the reference antenna module.

In some embodiments, the rotation indication information of the basic antenna sub-module group indicates an angle of rotation of each basic antenna element sub-module in the basic antenna sub-module group with respect to a respective reference point of the basic antenna element sub-module.

In some embodiments, in a case where the basic antenna sub-module is a uniform rectangular area array or includes only one minimum antenna sub-module, it actually makes no difference whether the basic antenna sub-module rotates or not. Therefore, the rotation indication information corresponding to the basic antenna sub-module may be defaulted and not configured in practical applications.

In some embodiments, among the K basic antenna sub-modules, if the shape of any basic antenna sub-module is a uniform rectangular area array and/or the total number of the index(es) of minimum antenna sub-module(s) of the any basic antenna sub-module is 1, the antenna set configuration information does not include the rotation indication information of the basic antenna sub-module.

In some embodiments, among the n basic antenna sub-module groups, if the shapes of the basic antenna sub-modules in any basic antenna sub-module group are uniform rectangular area arrays and/or the total number of the index(es) of minimum antenna sub-module(s) in the any basic antenna sub-module group is 1, the antenna set configuration information does not include the rotation indication information of the basic antenna sub-module group.

In some embodiments, in a case where the basic antenna sub-module includes only one minimum antenna sub-module, the reference point of the basic antenna sub-module is a location of the minimum antenna sub-module. Therefore, the information about the reference point of the basic antenna sub-module may be defaulted and not configured in practical applications.

In some embodiments, among the K basic antenna sub-modules, if the total number of the index(es) of minimum antenna sub-module(s) of any basic antenna sub-module is 1, the antenna set configuration information does not include the reference point of the basic antenna sub-module.

In some embodiments, among the n basic antenna sub-module groups, if the total number of the index(es) of minimum antenna sub-module(s) of the basic antenna sub-modules in the basic antenna element sub-module group in any basic antenna sub-module group is 1, the antenna set configuration information does not include the reference points of the basic antenna sub-modules in the basic antenna sub-module group.

In some embodiments, determining the feature indication information of the antenna set according to the antenna set configuration information includes: determining the feature indication information of the antenna set according to the feature indication information of the K basic antenna sub-modules, the position indication information of the K basic antenna sub-modules, the rotation indication information of the K basic antenna sub-modules, and the feature indication information of the reference antenna module; or, determining the feature indication information of the antenna set according to the feature indication information of the basic antenna sub-module groups, the position indication information of the basic antenna sub-module groups, the rotation indication information of the basic antenna sub-module groups, and the feature indication information of the reference antenna module, with the total number of the basic antenna sub-modules in all of the basic antenna sub-module groups being K; or, determining the feature indication information of the antenna set according to the feature indication information of the K basic antenna sub-modules, the position indication information of the K basic antenna sub-modules, and the feature indication information of the reference antenna module; or, determining the feature indication information of the antenna set according to the feature indication information of the basic antenna sub-module groups, the position indication information of the basic antenna sub-module groups, and the feature indication information of the reference antenna module; or, determining the feature indication information of the antenna set according to the feature indication information of K-K0 (K minus K0) basic antenna sub-modules, the position indication information of the K-K0 basic antenna sub-modules, the rotation indication information of the K-K0 basic antenna sub-modules, the feature indication information of the basic antenna sub-module groups, the position indication information of the basic antenna sub-module groups, the rotation indication information of the basic antenna sub-module groups, and the feature indication information of the reference antenna module, with the total number of the basic antenna sub-modules in all the basic antenna sub-module groups being K0 and K being greater than K0; or, determining the feature indication information of the antenna set according to the feature indication information of the K-KO basic antenna sub-modules, the position indication information of the K-KO basic antenna sub-modules, the feature indication information of the basic antenna sub-module groups, the position indication information of the basic antenna sub-module groups, and the feature indication information of the reference antenna module, with the total number of the basic antenna sub-modules in all the basic antenna sub-module groups being K0 and K being greater than K0; or, determining the feature indication information of the antenna set according to the feature indication information of the K-KO basic antenna sub-modules, the position indication information of the K-KO basic antenna sub-modules, the feature indication information of the basic antenna sub-module groups, the position indication information of the basic antenna sub-module groups, the position indication information of the basic antenna sub-module groups, and the feature indication information of the reference antenna module, with the total number of the basic antenna sub-modules in all the basic antenna sub-module groups being K0 and K being greater than K0; or, determining the feature indication information of the antenna set according to the feature indication information of the K-KO basic antenna sub-modules, the position indication information of the K-KO basic antenna sub-modules, the rotation indication information of the K-KO basic antenna sub-modules, the feature indication information of the basic antenna sub-module groups, the position indication information of the basic antenna sub-module groups, and the feature indication information of the reference antenna module, with the number of the basic antenna sub-modules in all the basic antenna sub-module groups being K0 and K being greater than K0.

In some embodiments, the feature indication information of the antenna set includes at least one of: a shape of the antenna set; the number of antenna elements of the antenna set; spatial distribution of the antenna elements of the antenna set; a polarization direction of the antenna elements of the antenna set; a reference point of the antenna set; indexes of minimum antenna sub-modules of the antenna set; antenna port indexes of the antenna set; or an indexing mode of the antenna set.

In some embodiments, the indexing mode of the antenna set includes: an indexing mode of the minimum antenna modules of the antenna set, an indexing mode of antenna ports of the antenna set, and an association relationship between the indexing mode of the minimum antenna modules of the antenna set and the indexing mode of the antenna ports of the antenna set.

In some embodiments, if the number of each of different types of basic antenna sub-modules in the antenna set is 1, the shapes of the basic antenna sub-modules in the antenna set include, but are not limited to, a uniform arcuate array, an L shape, a T shape, an S shape, and a shape of the Chinese character of " 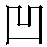 ".

The feature indication information of the antenna set is the same as that of the corresponding basic antenna sub-modules.

It should be noted that, in a case where the number of each of the different types of basic antenna sub-modules in the antenna set is 1, the shapes of the basic antenna sub-modules in the antenna set do not include a uniform linear array or a uniform rectangular area array.

In some embodiments, if the number of each of the different basic antenna sub-modules in the antenna set is greater than 1, the shapes of the basic antenna sub-modules in the antenna set include, but are not limited to, the uniform arcuate array, the L shape, the T shape, the S shape, the shape of the Chinese character of " 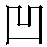 ", the uniform linear array, and the uniform rectangular area array.

The feature indication information of the antenna set is the same as the feature indication information of the corresponding basic antenna sub-modules or the feature indication information of the corresponding basic antenna sub-module groups; or the feature indication information of the antenna set is partially the same as the feature indication information of the corresponding basic antenna sub-modules or the feature indication information of the corresponding basic antenna sub-module groups; or the feature indication information of the antenna set is different from the feature indication information of the corresponding basic antenna sub-modules or the feature indication information of the corresponding basic antenna sub-module groups.

In some embodiments, the feature indication information of the antenna set is partially the same as that of the corresponding basic antenna sub-modules; and/or the polarization direction of the antenna set is the same as the polarization directions of the corresponding basic antenna sub-modules; and/or the antenna set is different from the corresponding basic antenna sub-modules in shape, number of antenna elements, and spatial distribution of antenna elements.

In some embodiments, the method is performed by any one of an AP, a UE, a Central Processing Unit (CPU), or a Mobile Edge Computing (MEC) device.

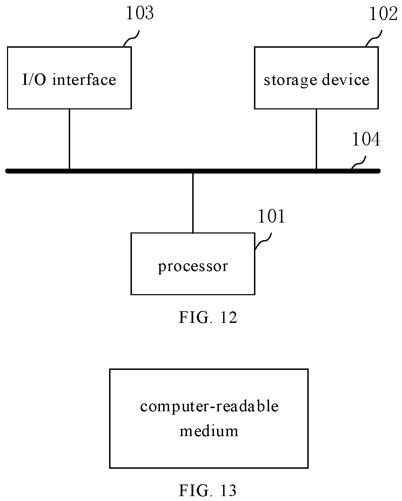

In a second aspect, referring to FIG. 12, an embodiment of the present disclosure provides an electronic device, including: one or more processors 101; a storage device 102 having stored thereon one or more programs which, when executed by the one or more processors, cause the one or more processors to implement the method described in the first aspect of the embodiments of the present disclosure; and one or more input/output (I/O) interfaces 103 connected between the one or more processors 101 and the storage device 102 and configured to enable information interaction between the one or more processors 101 and the storage device 102.

The processor 101 is a device having data processing capability, and includes, but is not limited to, a CPU. The storage device 102 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH). The I/O interface (read/write interface) 103 is connected between the processor 101 and the storage device 102, is capable of enabling the information interaction between the processor 101 and the storage device 102, and includes, but is not limited to, a data bus (Bus).

In some embodiments, the processor 101, the storage device 102, and the I/O interface 103 are connected to each other through a bus 104, and then are connected to other components of a computing device.

In a third aspect, referring to FIG. 13, an embodiment of the present disclosure provides a computer-readable medium having stored thereon a computer program which, when executed by a processor, implements the method described in the first aspect of the embodiments of the present disclosure.

In order to enable those of ordinary skill in the art to understand the technical solutions provided in the embodiments of the present disclosure more clearly, the technical solutions provided in the embodiments of the present disclosure are illustrated in detail below by specific examples.

### Example One

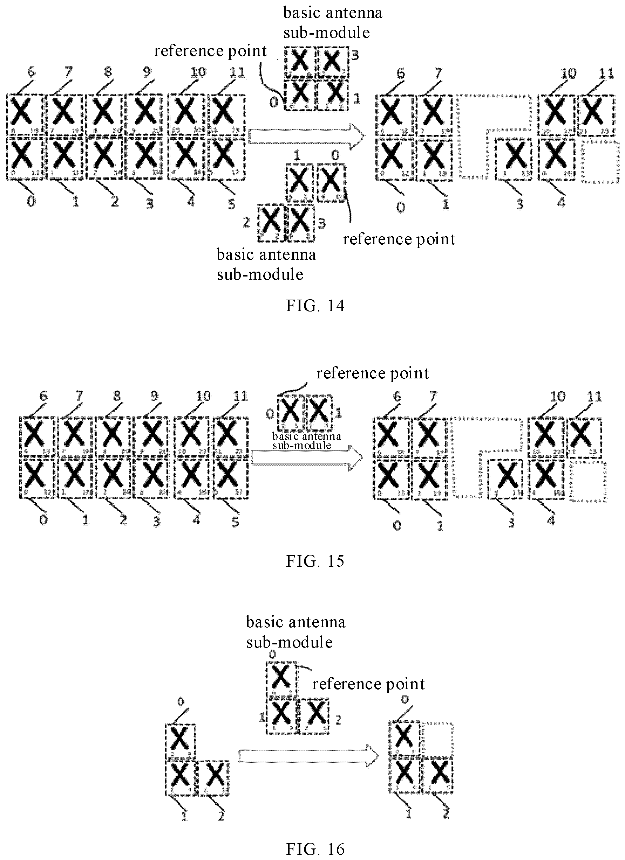

In this example, the antenna set includes a basic antenna sub-module which is a uniform rectangular area array antenna, and a basic antenna sub-module which is an S-shaped antenna, and the antenna set configuration information at least includes the position indication information {0, 11} of the two basic antenna sub-modules, the rotation indication information {0} of the S-shaped antenna, the feature indication information of the two basic antenna sub-modules {feature indication information of uniform rectangular area array antenna, feature indication information of S-shaped antenna}, and the feature indication information of the reference antenna module. Determining the feature indication information of the antenna set according to the antenna set configuration information is as shown in FIG. 14.

The feature indication information of the uniform rectangular area array antenna at least includes: information indicating that the shape of the basic antenna sub-module is the uniform rectangular area array; information indicating that the number of the antenna elements of the basic antenna sub-module is 8; information indicating the spatial distribution of the antenna elements of the basic antenna sub-module, in which the number of antenna elements with a same polarization direction in a horizontal direction is 2, the number of antenna elements with the same polarization direction in a vertical direction is 2, and the antenna elements in the horizontal direction and the antenna elements in the vertical direction are distributed at equal intervals; information indicating that the polarization direction of the antenna elements of the basic antenna sub-module is dual polarization; information indicating that the reference point of the basic antenna sub-module is a location of a minimum antenna sub-module at a lower left corner of the uniform rectangular area array antenna; information indicating that the indexes of minimum antenna sub-modules of the basic antenna sub-module are 0 to 3; the antenna port indexes of the basic antenna sub-module are 0 to 7; and information indicating that the indexing mode of the basic antenna sub-module includes an association relationship between the indexes of minimum antenna sub-modules of the basic antenna sub-module and the antenna port indexes of the basic antenna sub-module, which is represented as f(i) =(i,i+4), where i is a positive integer from 0 to 3 and denotes an index of a minimum antenna sub-module of the reference antenna module, and f(i) denotes an antenna port index of the reference antenna module.

The feature indication information of the S-shaped antenna at least includes: information indicating that the shape of the basic antenna sub-module is the S shape; information indicating that the number of the antenna elements of the basic antenna sub-module is 8; information indicating the spatial distribution of the antenna elements of the basic antenna sub-module, in which the antenna elements with a same polarization direction are distributed in an S shape; information indicating that the polarization direction of the antenna elements of the basic antenna sub-module is dual polarization; information indicating that the reference point of the basic antenna sub-module is a location of a minimum antenna sub-module at an upper right corner of the S-shaped antenna; information indicating that the indexes of minimum antenna sub-modules of the basic antenna sub-module are 0 to 3; information indicating that the antenna port indexes of the basic antenna sub-module are 0 to 7; and information indicating that the indexing mode of the basic antenna sub-module includes an association relationship between the indexes of the minimum antenna sub-modules of the basic antenna sub-module and the antenna port indexes of the basic antenna sub-module, which is represented as f(i) = (i,i + 4), where i is a positive integer from 0 to 3 and denotes a minimum antenna sub-module index of the reference antenna module, and f(i) denotes an antenna port index of the reference antenna module.

The feature indication information of the reference antenna module at least includes: information indicating that the shape of the reference antenna module is the uniform rectangular area array; information indicating that the number of the antenna elements of the reference antenna module is 24; information indicating the spatial distribution of the antenna elements of the reference antenna module, in which the number of antenna elements with a same polarization direction in a horizontal direction is 6, the number of antenna elements with the same polarization direction in a vertical direction is 2, and the antenna elements in the horizontal direction and the antenna elements in the vertical direction are distributed at equal intervals; information indicating that the polarization direction of the antenna elements of the reference antenna module is dual polarization; information indicating that the reference point of the reference antenna module is a location of a minimum antenna sub-module at a lower left corner of the uniform rectangular area array antenna; information indicating that the indexes of minimum antenna sub-modules of the reference antenna module are 0 to 11; information indicating that the antenna port indexes of the reference antenna module are 0 to 23; and information indicating that the indexing mode of the reference antenna module includes an association relationship between the indexes of the minimum antenna sub-modules of the reference antenna module and the antenna port indexes of the reference antenna module, which is represented as f(i) = (i,i + 12), where i is a positive integer from 0 to 11 and denotes an index of a minimum antenna sub-module of the reference antenna module, and f(i) denotes an antenna port index of the reference antenna module.

The feature indication information of the antenna set is determined according to the position indication information of the two basic antenna sub-modules, the rotation indication information of the S-shaped antenna, the feature indication information of the two basic antenna sub-modules, and the feature indication information of the reference antenna module.

The feature indication information of the antenna set at least includes: information indicating that the shape of the antenna set is an irregular shape formed by one square antenna and one S-shaped antenna; information indicating that the number of the antenna elements of the antenna set is 16; information indicating that the antenna elements with a same polarization direction in the antenna set are distributed in the shape of the antenna set; information indicating that the polarization direction of the antenna elements is dual polarization; information indicating that the reference point of the antenna set is a location of a minimum antenna sub-module at a lower left corner of the antenna set; information indicating that the indexes of the minimum antenna sub-modules of the antenna set are 0, 1, 3, 4, 6, 7, 10, and 11; the antenna port indexes of the antenna set are 0, 1, 3, 4, 6, 7, 10, 11, 12, 13, 15, 16, 18, 19, 22, and 23; and information indicating that an association relationship between the minimum antenna sub-module indexes of the antenna set and the antenna port indexes of the antenna set is represented as f(i) = (i,i + 12), where i has a value selected from 0, 1, 3, 4, 6, 7, 10, or 11 and denotes an index of a minimum antenna sub-module of the antenna set, and f(i) denotes an antenna port index of the antenna set.

The uniform rectangular area array antenna and the S-shaped antenna are the same in number of antenna elements, polarization direction of antenna elements, indexes of minimum antenna sub-modules of basic antenna sub-module, antenna port indexes of basic antenna sub-module, and indexing mode.

The other feature indication information of the uniform rectangular area array antenna is completely different from the other feature indication information of the S-shaped antenna.

The polarization direction of the antenna set is the same as the polarization direction of the uniform rectangular area array antenna and the polarization direction of the S-shaped antenna.

The reference point of the antenna set is the same as that of the uniform rectangular area array antenna, and is different from that of the S-shaped antenna.

The other feature indication information of the antenna set is completely different from the other feature indication information of the uniform rectangular area array antenna and the other feature indication information of the S-shaped antenna.

### Example Two

In this example, the antenna set includes basic antenna sub-modules, each of which is a uniform linear array antenna. The antenna set configuration information at least includes the position indication information {0, 3, 6, 10} of four basic antenna sub-modules, the feature indication information of the four basic antenna sub-modules {feature indication information of uniform linear array antenna, feature indication information of uniform linear array antenna, feature indication information of uniform linear array antenna, feature indication information of uniform linear array antenna}, and the feature indication information of the reference antenna module. The four basic antenna sub-modules have the same feature indication information.

Or, the antenna set configuration information at least includes the position indication information {0, 3, 6, 10} of a basic antenna sub-module group, the feature indication information {feature indication information of uniform linear array antenna} of the basic antenna sub-module group, and the feature indication information of the reference antenna module.

Determining the feature indication information of the antenna set according to the antenna set configuration information is as shown in FIG. 15.

The feature indication information of the basic antenna sub-module or the feature indication information of the basic antenna sub-module group at least includes: information indicating that the shape of the basic antenna sub-module is the uniform linear array; information indicating that the number of the antenna elements of the basic antenna sub-module is 4; information indicating the spatial distribution of the antenna elements of the basic antenna sub-module, in which the number of antenna elements with a same polarization direction in a horizontal direction is 2, the number of antenna elements with the same polarization direction in a vertical direction is 1, and the antenna elements in the horizontal direction are distributed at equal intervals; information indicating that the polarization direction of the antenna elements of the basic antenna sub-module is dual polarization; information indicating that the reference point of the basic antenna sub-module is a location of the leftmost minimum antenna sub-module of the uniform linear array antenna; information indicating that the indexes of the minimum antenna sub-modules of the basic antenna sub-module are 0 and 1; information indicating that the antenna port indexes of the basic antenna sub-module are 0 to 3; and information indicating that the indexing mode of the basic antenna sub-module includes an association relationship between the indexes of minimum antenna sub-modules of the basic antenna sub-module and the antenna port indexes of the basic antenna sub-module, which is represented as f(i) = (i,i + 2), where i is 0 or 1, and denotes an index of a minimum antenna sub-module of the reference antenna module, and f(i) denotes an antenna port index of the reference antenna module.

The feature indication information of the reference antenna module at least includes: information indicating that the shape of the reference antenna module is an uniform rectangular area array; information indicating that the number of the antenna elements of the reference antenna module is 24; information indicating the spatial distribution of the antenna elements of the reference antenna module, in which the number of antenna elements with a same polarization direction in a horizontal direction is 6, the number of antenna elements with the same polarization direction in a vertical direction is 2, and the antenna elements in the horizontal direction and the antenna elements in the vertical direction are distributed at equal intervals; information indicating that the polarization direction of the antenna elements of the reference antenna module is dual polarization; information indicating that the reference point of the reference antenna module is a location of a minimum antenna sub-module at a lower left corner of the uniform rectangular area array antenna; information indicating that the indexes of minimum antenna sub-modules of the reference antenna module are 0 to 11; information indicating that the antenna port indexes of the reference antenna module are 0 to 23; and information indicating that the indexing mode of the reference antenna module includes an association relationship between the indexes of the minimum antenna sub-modules of the reference antenna module and the antenna port indexes of the reference antenna module, which is represented as f(i) = (i,i + 12), where i is a positive integer from 0 to 11 and denotes an index of a minimum antenna sub-module of the reference antenna module, and f(i) denotes an antenna port index of the reference antenna module.

The feature indication information of the antenna set is determined according to the position indication information of the four basic antenna sub-modules, the feature indication information of the four basic antenna sub-modules, and the feature indication information of the reference antenna module; or the feature indication information of the antenna set is determined according to the position indication information of the basic antenna sub-module group, the feature indication information of the basic antenna sub-module group, and the feature indication information of the reference antenna module.

The feature indication information of the antenna set at least includes: information indicating that the shape of the antenna set is an irregular shape formed by one square and one S-shaped antenna; information indicating that the number of the antenna elements of the antenna set is 16; information indicating that the antenna elements with a same polarization direction of the antenna set are distributed in the shape of the antenna set; information indicating that the polarization direction of the antenna antenna elements is dual polarization; information indicating that the reference point of the antenna set is a location of a minimum antenna sub-module at a lower left corner of the antenna set; information indicating that the indexes of the minimum antenna sub-modules of the antenna set are 0, 1, 3, 4, 6, 7, 10, and 11; information indicating that the antenna port indexes of the antenna set are 0, 1, 3, 4, 6, 7, 10, 11, 12, 13, 15, 16, 18, 19, 22, and 23; and information indicating that an association relationship between the minimum antenna sub-module indexes of the antenna set and the antenna port indexes of the antenna set is represented as f(i) = (i,i + 12), where i is 0, 1, 3, 4, 6, 7, 10, or 11 and denotes an index of a minimum antenna sub-module of the antenna set, and f(i) denotes an antenna port index of the antenna set.

The polarization direction of the antenna set is the same as that of the basic antenna sub-module.

The reference point of the antenna set is the same as that of the basic antenna sub-module having the minimum position information value, and is different from the reference points of the other three basic antenna sub-modules.

The other feature indication information of the antenna set is completely different from the other feature indication information of the basic antenna sub-module.

### Example Three

This example includes a basic antenna sub-module which is an L-shaped antenna. The antenna set configuration information at least includes the position indication information of a basic antenna sub-module {2}, the feature indication information of the basic antenna sub-module {feature indication information of L-shaped antenna}, the rotation indication information of the basic antenna sub-module {0}, and the feature indication information of the reference antenna module.

Determining the feature indication information of the antenna set according to the antenna set configuration information is as shown in FIG. 16.

The feature indication information of the basic antenna sub-module at least includes: information indicating that the shape of the basic antenna sub-module is an L shape; information indicating that the number of the antenna elements of the basic antenna sub-module is 6; information indicating the spatial distribution of the antenna elements of the basic antenna sub-module, in which the antenna elements with a same polarization direction are distributed in an L shape; information indicating that the polarization direction of the antenna elements of the basic antenna sub-module is dual polarization; information indicating that the reference point of the basic antenna sub-module is a location of the uppermost minimum antenna sub-module of the L-shaped antenna; information indicating that the indexes of the minimum antenna sub-modules of the basic antenna sub-module are 0 to 2; information indicating that the antenna port indexes of the basic antenna sub-module are 0 to 5; and information indicating that the indexing mode of the basic antenna sub-module includes an association relationship between the indexes of the minimum antenna sub-modules of the basic antenna sub-module and the antenna port indexes of the basic antenna sub-module, which is represented as f(i) = (i,i + 3), where i is 0, 1, or 2, and denotes an index of a minimum antenna sub-module of the reference antenna module, and f(i) denotes an antenna port index of the reference antenna module.

The feature indication information of the reference antenna module at least includes: information indicating that the shape of the reference antenna module is an uniform rectangular area array; information indicating that the number of the antenna elements of the reference antenna module is 8; information indicating the spatial distribution of the antenna elements of the reference antenna module, in which the number of the antenna elements with a same polarization direction in a horizontal direction is 2, the number of the antenna elements with the same polarization direction in a vertical direction is 2, and the antenna elements in the horizontal direction and the antenna elements in the vertical direction are distributed at equal intervals; information indicating that the polarization direction of the antenna elements of the reference antenna module is dual polarization; information indicating that the reference point of the reference antenna module is a location of a minimum antenna sub-module at a lower left corner of the uniform rectangular area array antenna; information indicating that the indexes of the minimum antenna sub-modules of the reference antenna module are 0 to 3; information indicating that the antenna port indexes of the reference antenna module are 0 to 7; and information indicating that the indexing mode of the reference antenna module includes an association relationship between the indexes of the minimum antenna sub-modules of the reference antenna module and the antenna port indexes of the reference antenna module, which is represented as f(i)=(i,i+4), where i is a positive integer from 0 to 3 and denotes a minimum antenna sub-module index of the reference antenna module, and f(i) denotes an antenna port index of the reference antenna module.

The feature indication information of the antenna set is determined according to the position indication information of the basic antenna sub-module, the rotation indication information of the basic antenna sub-module, the feature indication information of the basic antenna sub-module, and the feature indication information of the reference antenna module.

The feature indication information of the antenna set at least includes: information indicating that the shape of the antenna set is an L shape; information indicating that the number of the antenna elements of the antenna set is 6; information indicating the spatial distribution of the antenna elements of the antenna set, in which the antenna elements with a same polarization direction are distributed in an L shape; information indicating that the polarization direction of the antenna elements of the antenna set is dual polarization; information indicating that the reference point of the antenna set is the location of the uppermost minimum antenna sub-module of the L-shaped antenna; information indicating that the indexes of the minimum antenna sub-modules of the antenna set are 0 to 2; information indicating that the antenna port indexes of the antenna set are 0 to 5; and information indicating that the indexing mode of the antenna set includes an association relationship between the indexes of minimum antenna sub-modules of the antenna set and the antenna port indexes of the antenna set, which is represented as f(i)=(i,i+3), where i is 0, 1, or 2, and denotes an index of a minimum antenna sub-module of the reference antenna module, and f(i) denotes an antenna port index of the reference antenna module.

The antenna set and the basic antenna sub-module have the completely same feature indication information.

It should be understood by those of ordinary skill in the art that the functional modules/antennas in all or some of the operations, the systems, and the devices in the method disclosed above may be implemented as software, firmware, hardware, or suitable combinations thereof. If implemented as hardware, the division between the functional modules/antennas stated above is not necessarily corresponding to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A method for determining an antenna set, comprising:
determining antenna set configuration information, wherein the antenna set configuration information represents a configuration situation of the antenna set consisting of minimum antenna sub-modules; and
determining feature indication information of the antenna set according to the antenna set configuration information.

2. The method of claim 1, wherein the antenna set configuration information comprises at least one of: feature indication information of K basic antenna sub-modules, position indication information of the K basic antenna sub-modules, rotation indication information of the K basic antenna sub-modules, or feature indication information of a reference antenna module, and
K is a positive integer, and each of the basic antenna sub-modules and the reference antenna module consists of ones of the minimum antenna sub-modules.

3. The method of claim 2, wherein the antenna set configuration information further comprises:
configuration information of basic antenna sub-module groups, wherein K0 basic antenna sub-modules among the K basic antenna sub-modules are divided into n different basic antenna sub-module groups,
wherein the configuration information of the basic antenna sub-module groups comprises at least one of: feature indication information of the basic antenna sub-module groups, position indication information of the basic antenna sub-module groups, or rotation indication information of the basic antenna sub-module groups, and
wherein K, K0, and n are positive integers, and K0 is not greater than K.

4. The method of claim 2, wherein the feature indication information of the basic antenna sub-module comprises at least one of: a shape of the basic antenna sub-module, a number of antenna elements of the basic antenna sub-module, spatial distribution of the antenna elements of the basic antenna sub-module, a polarization direction of the antenna elements of the basic antenna sub-module, a reference point of the basic antenna sub-module, indexes of the minimum antenna sub-modules of the basic antenna sub-module, antenna port indexes of the basic antenna sub-module, or an indexing mode of the basic antenna sub-module, and
the reference point of the basic antenna sub-module represents a location of a specified minimum antenna sub-module of the basic antenna sub-module.

5. The method of claim 4, wherein the shape of the basic antenna sub-module comprises a uniform linear array, a uniform arcuate array, a uniform rectangular area array, an L shape, a T shape, an S shape, and a shape of a Chinese character of " 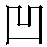 ".

6. The method of claim 2, wherein the position indication information of the basic antenna sub-module indicates an index of a minimum antenna sub-module, which corresponds to a reference point of the basic antenna sub-module, in the reference antenna module, and
the rotation indication information of the basic antenna sub-module indicates an angle of rotation of the basic antenna sub-module with respect to the reference point of the basic antenna sub-module.

7. The method of claim 2, wherein the feature indication information of the reference antenna module comprises at least one of: a shape of the reference antenna module, a number of antenna elements of the reference antenna module, spatial distribution of the antenna elements of the reference antenna module, a polarization direction of the antenna elements of the reference antenna module, a reference point of the reference antenna module, indexes of the minimum antenna sub-modules of the reference antenna module, antenna port indexes of the reference antenna module, or an indexing mode of the reference antenna module.

8. The method of claim 7, wherein the shape of the reference antenna module comprises: a uniform rectangular area array, and a uniform circular linear array.

9. The method of claim 3, wherein, among the n different basic antenna sub-module groups, each basic antenna sub-module group comprises at least one basic antenna sub-module, and the basic antenna sub-modules in each basic antenna sub-module group are the same,
the feature indication information of the basic antenna sub-module group is the feature indication information of the basic antenna sub-modules in the basic antenna sub-module group,
the position indication information of the basic antenna sub-module group indicates an index of a minimum antenna sub-module, which corresponds to a reference point of each basic antenna sub-module in the basic antenna sub-module group, in the reference antenna module, and
the rotation indication information of a basic antenna sub-module group indicates an angle of rotation of each basic antenna sub-module in the basic antenna sub-module group with respect to the respective reference point of the basic antenna sub-module.

10. The method of claim 2, wherein, in a case where a shape of any basic antenna sub-module among the K basic antenna sub-modules is a uniform rectangular area array and/or a total number of indexes of minimum antenna sub-modules of the any basic antenna sub-module is 1, the antenna set configuration information comprises no rotation indication information of the any basic antenna sub-module.

11. The method of claim 3, wherein, in a case where shapes of the basic antenna sub-modules in any basic antenna sub-module group among the n basic antenna sub-module groups are uniform rectangular area arrays and/or a total number of indexes of minimum antenna sub-modules of the basic antenna sub-modules in the any basic antenna sub-module group is 1, the antenna set configuration information comprises no rotation indication information of the any basic antenna sub-module group.

12. The method of claim 2, wherein, in a case where a total number of indexes of minimum antenna sub-modules of any basic antenna sub-module among the K basic antenna sub-modules is 1, the antenna set configuration information comprises no reference point of the any basic antenna sub-module.

13. The method of claim 3, wherein, in a case where a total number of indexes of minimum antenna sub-modules of the basic antenna sub-modules in the basic antenna sub-module group in any basic antenna sub-module group among the n basic antenna sub-module groups is 1, the antenna set configuration information comprises no reference points of the basic antenna sub-modules in the any basic antenna sub-module group.

14. The method of claim 1, wherein the determining the feature indication information of the antenna set according to the antenna set configuration information comprises:
determining the feature indication information of the antenna set according to feature indication information of K basic antenna sub-modules, position indication information of the K basic antenna sub-modules, rotation indication information of the K basic antenna sub-modules, and feature indication information of a reference antenna module, or
determining the feature indication information of the antenna set according to feature indication information of basic antenna sub-module groups, position indication information of the basic antenna sub-module groups, rotation indication information of the basic antenna sub-module groups, and the feature indication information of the reference antenna module, wherein a total number of basic antenna sub-modules in all of the basic antenna sub-module groups is K, or
determining the feature indication information of the antenna set according to the feature indication information of the K basic antenna sub-modules, the position indication information of the K basic antenna sub-modules, and the feature indication information of the reference antenna module, or
determining the feature indication information of the antenna set according to the feature indication information of the basic antenna sub-module groups, the position indication information of the basic antenna sub-module groups, and the feature indication information of the reference antenna module, or
determining the feature indication information of the antenna set according to the feature indication information of K - K0 basic antenna sub-modules, the position indication information of the K-KO basic antenna sub-modules, the rotation indication information of the K-KO basic antenna sub-modules, the feature indication information of the basic antenna sub-module groups, the position indication information of the basic antenna sub-module groups, the rotation indication information of the basic antenna sub-module groups, and the feature indication information of the reference antenna module, wherein a total number of basic antenna sub-modules in all of the basic antenna sub-module groups is K0, and K is greater than K0, or
determining the feature indication information of the antenna set according to the feature indication information of the K-K0 basic antenna sub-modules, the position indication information of the K-KO basic antenna sub-modules, the feature indication information of the basic antenna sub-module groups, the position indication information of the basic antenna sub-module groups, and the feature indication information of the reference antenna module, wherein the total number of the basic antenna sub-modules in all of the basic antenna sub-module groups is K0, and K is greater than K0, or
determining the feature indication information of the antenna set according to the feature indication information of the K-K0 basic antenna sub-modules, the position indication information of the K-KO basic antenna sub-modules, the feature indication information of the basic antenna sub-module groups, the position indication information of the basic antenna sub-module groups, the position indication information of the basic antenna sub-module groups, and the feature indication information of the reference antenna module, wherein the total number of the basic antenna sub-modules in all of the basic antenna sub-module groups is K0, and K is greater than K0, or
determining the feature indication information of the antenna set according to the feature indication information of the K-K0 basic antenna sub-modules, the position indication information of the K-K0 basic antenna sub-modules, the rotation indication information of the K-K0 basic antenna sub-modules, the feature indication information of the basic antenna sub-module groups, the position indication information of the basic antenna sub-module groups, and the feature indication information of the reference antenna module, wherein the number of the basic antenna sub-modules in all of the basic antenna sub-module groups is K0, and K is greater than K0.

15. The method of claim 1, wherein the feature indication information of the antenna set comprises at least one of:
a shape of the antenna set, a number of antenna elements of the antenna set, spatial distribution of the antenna elements of the antenna set, a polarization direction of the antenna elements of the antenna set, a reference point of the antenna set, indexes of the minimum antenna sub-modules of the antenna set, antenna port indexes of the antenna set, or an indexing mode of the antenna set.

16. The method of claim 15, wherein the indexing mode of the antenna set comprises: an indexing mode of the minimum antenna modules of the antenna set, an indexing mode of antenna ports of the antenna set, and an association relationship between the indexing mode of the minimum antenna modules of the antenna set and the indexing mode of the antenna ports of the antenna set.

17. The method of claim 1, wherein, in a case where a number of each of different basic antenna sub-modules in the antenna set is 1, shapes of the basic antenna sub-modules in the antenna set are selected from a uniform arcuate array, an L shape, a T shape, an S shape, and a shape of a Chinese character of " 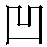 ", and
the feature indication information of the antenna set is the same as feature indication information of corresponding basic antenna sub-modules.

18. The method of claim 1, wherein, in a case where a number of each of different basic antenna sub-modules in the antenna set is greater than 1, shapes of the basic antenna sub-modules in the antenna set are selected from a uniform arcuate array, an L shape, a T shape, an S shape, a shape of a Chinese character of " 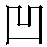 ", a uniform linear array, and a uniform rectangular area array, and
the feature indication information of the antenna set is the same as feature indication information of corresponding basic antenna sub-modules or feature indication information of corresponding basic antenna sub-module groups, or
the feature indication information of the antenna set is partially the same as the feature indication information of the corresponding basic antenna sub-modules or the feature indication information of the corresponding basic antenna sub-module groups, or
the feature indication information of the antenna set is different from the feature indication information of the corresponding basic antenna sub-modules or the feature indication information of the corresponding basic antenna sub-module groups.

19. The method of claim 18, wherein the feature indication information of the antenna set is partially the same as the feature indication information of the corresponding basic antenna sub-modules, and/or
a polarization direction of the antenna set is the same as polarization directions of the corresponding basic antenna sub-modules, and/or
the antenna set is different from the corresponding basic antenna sub-modules in shape, number of antenna elements, and spatial distribution of antenna elements.

20. The method of claim 1, wherein the method is performed by any one of an Access Point (AP), a User Equipment (UE), a Central Processing Unit (CPU), and a Mobile Edge Computing (MEC) device.

21. An electronic device, comprising:
one or more processors;
a storage device having stored thereon one or more programs which, when executed by the one or more processors, cause the one or more processors to implement the method of any one of claims 1 to 20; and
one or more input/output (I/O) interfaces connected between the one or more processors and the storage device and configured to enable information interaction between the one or more processors and the storage device.

22. A computer-readable medium having stored thereon a computer program which, when executed by a processor, implements the method of any one of claims 1 to 20.
